(19) Europäisches Patentamt
European Patent Office
Office européen des brevets

(11) EP 2 181 161 B1

(12) # FASCICULE DE BREVET EUROPEEN

(45) Date de publication et mention de la délivrance du brevet:
**20.02.2013 Bulletin 2013/08**

(21) Numéro de dépôt: **08826733.1**

(22) Date de dépôt: **25.06.2008**

(51) Int Cl.:
***C09B 67/26*** (2006.01) ***C09B 67/34*** (2006.01)
***C02F 1/00*** (2006.01) ***C09B 67/20*** (2006.01)
***C09B 67/22*** (2006.01) ***B01F 3/12*** (2006.01)

(86) Numéro de dépôt international:
**PCT/FR2008/000898**

(87) Numéro de publication internationale:
**WO 2009/016283 (05.02.2009 Gazette 2009/06)**

(54) **PROCEDE ET COMPOSITION POUR COLORER LES EAUX DE BASSINS DE BAINS ET/OU DE BAIGNADES**

VERFAHREN UND ZUSAMMENSETZUNG ZUM FÄRBEN VON WASSER IN BECKEN, BÄDERN UND/ODER BADEPLÄTZEN

PROCESS AND COMPOSITION FOR COLOURING THE WATER OF BASINS, BATHS AND/OR BATHING PLACES

(84) Etats contractants désignés:
**AT BE BG CH CY CZ DE DK EE ES FI GB GR HR HU IE IS IT LI LT LU LV MC MT NL NO PL PT RO SE SI SK TR**

(30) Priorité: **26.06.2007 FR 0704577**

(43) Date de publication de la demande:
**05.05.2010 Bulletin 2010/18**

(73) Titulaire: **Gaches Chimie Specialités**
**31100 Toulouse (FR)**

(72) Inventeur: **CAVÉ, Alain**
**F-31390 Carbonne (FR)**

(74) Mandataire: **Cabinet BARRE LAFORGUE & associés**
**35, rue Lancefoc**
**31000 Toulouse (FR)**

(56) Documents cités:
**WO-A-2005/023975** **WO-A-2007/065575**
**BR-A- 9 600 226** **BR-A- 9 605 603**
**DE-A1-102005 024 496** **FR-A- 2 857 596**
**FR-A- 2 868 701** **US-A1- 2003 109 392**

- **DATABASE WPI Week 200553 Thomson Scientific, London, GB; AN 2005-517133 XP002475098 -& JP 2005 194195 A (HEALTH CHEM KK) 21 juillet 2005 (2005-07-21)**
- **DATABASE WPI Week 199551 Thomson Scientific, London, GB; AN 1995-394880 XP002475099 & JP 07 242532 A (EARTH SEIYAKU KK) 19 septembre 1995 (1995-09-19)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne un procédé ainsi qu'une composition permettant de colorer des eaux de bassins, en particulier des eaux de bains et/ou de baignades (piscines, spas...).

L'invention a trait au domaine technique de la décoration et de l'amélioration esthétique des eaux de bassins -notamment l'eau des piscines, des spas...- en vue d'apporter une ambiance festive, feutrée et/ou ludique. L'invention s'intéresse en particulier aux méthodes et aux moyens qui permettent de changer à volonté et de façon instantanée la couleur de ces bassins.

A cet effet, on connaît les dispositifs d'éclairage qui diffusent une lumière colorée qui se reflète à la surface des bassins, et leur confèrent une apparence visuellement colorée du plus bel effet. Ces dispositifs sont soit intégrés dans la paroi même du bassin, soit installés au voisinage direct du plan d'eau à illuminer. De tels dispositifs et installations, souvent coûteux, présentent les inconvénients d'un fonctionnement électrique et d'une utilisation exclusivement nocturne.

BR 9 600 226 décrit une composition colorante pour aquariums, piscines, baignoires et assimilés, préparée à partir de colorants artificiels, et qui reste sans effet pour l'être humain qui rentre en contact avec l'eau colorée.

L'invention vise à proposer un procédé pour colorer les eaux de bassins, qui permet de façon simple et rapide d'obtenir une couleur visuellement notable aussi bien de jour que de nuit.

Dans ce contexte, un objectif principal de l'invention est de proposer un procédé adapté à tout type de bassins, piscines, spas..., ne nécessitant pour sa mise oeuvre aucun investissement financier sérieux -en particulier, aucun ouvrage et/ou aménagement particuliers des bassins et/ou des zones d'implantation de ces bassins-.

Egalement, l'invention vise à proposer un procédé sans danger -en particulier, sans risque d'électrocution-, ni pour les baigneurs ni pour les personnes se tenant à proximité du plan d'eau concerné.

Un autre objectif important de l'invention est de proposer un procédé de coloration des eaux de bassins offrant un panel important et varié de couleurs...

Pour ce faire, l'invention concerne un procédé pour colorer une eau de bassin, dans lequel on utilise au moins un colorant (*i*) choisi dans le groupe formé par les colorants alimentaires : E 131, E 132, E 133, E 104, E 110, E 122, E 123, E 124, E 129, E 151.

Selon l'invention, on mélange chaque colorant (*i*) choisi à ladite eau pour obtenir une concentration finale ($C_i$) de ce colorant (*i*), adaptée pour rendre ladite eau visuellement colorée et sans que cette concentration finale ($C_i$) ne dépasse une concentration maximum ($Cmax_i$), spécifique audit colorant (i), de valeur suivante :

- 0,4 $g.m^{-3}$ pour le colorant E 131,
- 0,5 $g.m^{-3}$ pour le colorant E 132,
- 0,4 $g.m^{-3}$ pour le colorant E 133,
- 0,6 $g.m^{-3}$ pour le colorant E 104,
- 0,75 $g.m^{-3}$ pour le colorant E 110,
- 0,5 $g.m^{-3}$ pour le colorant E 122,
- 0,3 $g.m^{-3}$ pour le colorant E 123,
- 0,5 $g.m^{-3}$ pour le colorant E 124,
- 0,5 $g.m^{-3}$ pour le colorant E 129,
- 0,5 $g.m^{-3}$ pour le colorant E 151.

Ces valeurs spécifiques à chaque colorant (i), correspondent à des valeurs de concentration finales dans l'eau de bassin au-delà desquelles, le colorant utilisé (*i*) provoque une opacité quelque peu déplaisante de l'eau de bassin. Les colorants utilisés (*i*) à une valeur ($C_i$) de concentration en colorant (*i*) inférieures à ($Cmax_i$) ne présentent pas de toxicité pour les baigneurs susceptibles de profiter de cette eau de bassin. En outre la valeur ($C_i$) de concentration en colorant (*i*) est adaptée pour donner à l'eau de bassin un aspect visuellement coloré, sans toutefois tacher et ou décolorer les vêtements et autres tissus qui sont mis au contact de l'eau colorée.

Avantageusement et selon l'invention, les valeurs de concentrations maximum ($Cmax_i$) de chaque colorant (*i*) sont les suivantes :

- 0,3 $g.m^{-3}$ pour le colorant E 131,
- 0,4 $g.m^{-3}$ pour le colorant E 132,
- 0,2 $g.m^{-3}$ pour le colorant E 133,
- 0,56 $g.m^{-3}$ pour le colorant E 104,
- 0,25 $g.m^{-3}$ pour le colorant E 110,
- 0,4 $g.m^{-3}$ pour le colorant E 122,
- 0,3 $g.m^{-3}$ pour le colorant E 123,

- 0,4 $g.m^{-3}$ pour le colorant E 124,
- 0,4 $g.m^{-3}$ pour le colorant E 129,
- 0,4 $g.m^{-3}$ pour le colorant E 151.

Ces valeurs limites, spécifiques à chaque colorant (*i*) correspondent à des valeurs ($C_i$) de concentration en colorant (*i*) préférentielles permettant d'obtenir une eau de bassin ne présentant pas de toxicité pour les baigneurs profitant de ladite eau, ne tachant pas et ne colorant pas les vêtements et autres tissus qui sont mis au contact de l'eau colorée, ne provoquant pas une opacité quelque peu déplaisante de l'eau de bassin, et donnant néanmoins à ladite eau dans le bassin un aspect visuellement coloré.

Avantageusement et selon l'invention, les valeurs de concentrations maximum ($Cmax_i$) de chaque colorant (i) sont les suivantes :

- 0,2 $g.m^{-3}$ pour le colorant E 131,
- 0,25 $g.m^{-3}$ pour le colorant E 132,
- 0,1 $g.m^{-3}$ pour le colorant E 133,
- 0,3 $g.m^{-3}$ pour le colorant E 104,
- 0,12 $g.m^{-3}$ pour le colorant E 110,
- 0,2 $g.m^{-3}$ pour le colorant E 122,
- 0,2 $g.m^{-3}$ pour le colorant E 123,
- 0,2 $g.m^{-3}$ pour le colorant E 124,
- 0,2 $g.m^{-3}$ pour le colorant E 129,
- 0,2 $g.m^{-3}$ pour le colorant E 151.

Ces valeurs seuils spécifiques à chaque colorant (i) correspondent à des valeurs optimisées, d'un mode préférentiel de réalisation d'un procédé selon l'invention, pour l'obtention d'une eau de baignade de grande qualité, notamment pour lesquelles le colorant utilisé ne provoque pas une opacité de l'eau de bassin, ne tache pas ni ne colore les vêtements et autres tissus qui sont mis au contact de l'eau colorée, ne présente pas de toxicité pour les baigneurs et permet d'obtenir une eau de bassin visuellement colorée.

Avantageusement et selon l'invention, on mélange chaque colorant (i) choisi à l'eau de bassin pour obtenir une concentration finale (C;) de ce colorant (*i*), adaptée pour rendre ladite eau visuellement colorée et sans que cette concentration finale ($C_i$) ne dépasse aussi une concentration maximum théorique ($Cmth_i$), spécifique audit colorant (*i*) et de valeur déterminée par l'équation (Eq. *1)* de forme générale :

$$Cmth_i = K_i \times Pds + a_i \qquad (Eq.\ 1),$$

dans laquelle :

- $Cmth_i$ est exprimée en $g.m^{-3}$ d'eau de bassin,
- *Pds,* exprimé en kg, est une variable correspondant au poids d'un baigneur de référence,
- $K_i$ et $a_i$ sont des coefficients prédéterminés, spécifiques à chaque colorant (i), et tels que :
  - $K_{E\ 131} = 33.10^{-4}$ $a_{E\ 131} \sim 0$
  - $K_{E\ 132} = 33.10^{-4}$ $a_{E\ 132} \sim 0$
  - $K_{E\ 133} = 40.10^{-4}$ $a_{E\ 133} = 0$
  - $K_{E\ 104} = 40.10^{-4}$ $a_{E\ 104} \sim 0$
  - $K_{E\ 110} = 50.10^{-4}$ $a_{E\ 110} \sim 0$
  - $K_{E\ 122} = 33.10^{-4}$ $a_{E\ 122} \sim 0$
  - $K_{E\ 123} = 20.10^{-4}$ $a_{E\ 123} \sim 0$
  - $K_{E\ 124} = 33.10^{-4}$ $a_{E\ 124} \sim 0$
  - $K_{E\ 129} = 33.10^{-4}$ $a_{E\ 129} = 0$
  - $K_{E\ 151} = 33.10^{-4}$ $a_{E\ 151} \sim 0$.

Avantageusement et selon l'invention, pour chaque colorant (*i*) choisi, on détermine la valeur de concentration maximum *($Cmth_i$)* à ne pas dépasser en utilisant une base de données préétablie regroupant des valeurs de concentration maximum ($Cmth_i$) préconisées, déterminées par l'équation (*Eq. 1*).

Avantageusement, une dilution unique est préconisée, cette dilution étant calculée par rapport à un baigneur de poids standard, notamment au baigneur de poids le plus faible susceptible de profiter de ladite eau de bassin.

L'équation (*Eq. 1*) qui renseigne sur les valeurs de concentration maximum théorique *($Cmth_i$)* à ne pas dépasser, selon le colorant (*i*) et selon le poids du baigneur de référence, a été établie par les inventeurs aux fins d'éviter tout risque d'intoxication et effet secondaire pouvant être causés par un contact prolongé avec l'eau de bassin visuellement colorée obtenue conformément à l'invention, ou en cas d'ingestion de cette eau.

Avantageusement et selon l'invention, pour chaque colorant (*i*) choisi, on réalise une dilution préconisée découlant des données présentées dans le tableau 1 ci-après.

| | | $Cmth_i$ (g/m$^3$ d'eau) | | | | | | |
|---|---|---|---|---|---|---|---|---|
| *Pds* (kg) | | 10 | 20 | 50 | 80 | 100 | 120 | 150 |
| Colorant (*i*) | E 131 | 0,12 | 0,25 | 0,40 | 0,40 | 0,40 | 0,40 | 0,40 |
| | E 132 | 0,25 | 0,50 | 0,50 | 0,50 | 0,50 | 0,50 | 0,50 |
| | E 133 | 0,40 | 0,40 | 0,40 | 0,40 | 0,40 | 0,40 | 0,40 |
| | E 104 | 0,03 | 0,07 | 0,18 | 0,30 | 0,37 | 0,45 | 0,56 |
| | E 110 | 0,12 | 0,25 | 0,75 | 0,75 | 0,75 | 0,75 | 0,75 |
| | E 122 | 0,10 | 0,20 | 0,50 | 0,50 | 0,50 | 0,50 | 0,50 |
| | E 123 | 0,03 | 0,07 | 0,18 | 0,30 | 0,30 | 0,30 | 0,30 |
| | E 124 | 0,007 | 0,01 | 0,03 | 0,06 | 0,07 | 0,09 | 0,11 |
| | E 129 | 0,50 | 0,50 | 0,50 | 0,50 | 0,50 | 0,50 | 0,50 |
| | E 151 | 0,05 | 0,10 | 0,25 | 0,40 | 0,50 | 0,50 | 0,50 |

Tableau 1

Avantageusement et selon l'invention, on mélange à l'eau de bassin chaque colorant *(i)* choisi en réalisant une dilution permettant d'obtenir une eau visuellement colorée ayant une concentration finale ($C_i$) de ce colorant *(i)*, de valeur optimale *($Copt_i$)* donnée en référence au poids *(Pds)* d'un baigneur de référence, et selon le tableau 2 ci-après.

| | | $Copt_i$ (g/m$^3$ d'eau) | | | | | | |
|---|---|---|---|---|---|---|---|---|
| *Pds* (kg) | | 10 | 20 | 50 | 80 | 100 | 120 | 150 |
| Colorant (*i*) | E 131 | 0,12 | 0,20 | 0,20 | 0,20 | 0,20 | 0,20 | 0,20 |
| | E 132 | 0,25 | 0,25 | 0,25 | 0,25 | 0,25 | 0,25 | 0,25 |
| | E 133 | 0,10 | 0,10 | 0,10 | 0,10 | 0,10 | 0,10 | 0,10 |
| | E 104 | 0,03 | 0,07 | 0,18 | 0,30 | 0,30 | 0,30 | 0,30 |
| | E 110 | 0,12 | 0,12 | 0,12 | 0,12 | 0,12 | 0,12 | 0,12 |
| | E 122 | 0,10 | 0,20 | 0,20 | 0,20 | 0,20 | 0,20 | 0,20 |
| | E 123 | 0,03 | 0,07 | 0,18 | 0,20 | 0,20 | 0,20 | 0,20 |
| | E 124 | 0,007 | 0,01 | 0,03 | 0,06 | 0,07 | 0,09 | 0,11 |
| | E 129 | 0,20 | 0,20 | 0,20 | 0,20 | 0,20 | 0,20 | 0,20 |
| | E 151 | 0,05 | 0,10 | 0,20 | 0,20 | 0,20 | 0,20 | 0,20 |

Tableau 2

Selon un mode de mise en oeuvre optimisé de l'invention, on mélange à l'eau de bassin chaque colorant *(i)* choisi en réalisant une dilution permettant d'obtenir, dans le bassin, une eau visuellement colorée ayant une concentration

finale *($C_i$)* de ce colorant *(i),* de valeur ne dépassant pas une concentration optimale *($Copt_i$)*. On choisit la concentration optimale *($Copt_i$)* à ne pas dépasser parmi un groupe de valeurs préconisées, données en référence à des poids de baigneurs de référence, et au moins en partie extraites du tableau 2.

Avantageusement et selon l'invention, on mélange à l'eau de bassin chaque colorant (*i*) choisi en réalisant une dilution permettant d'obtenir une eau visuellement colorée ayant une concentration finale ($C_i$) de ce colorant (*i*), qui ne dépasse pas une valeur maximum *($Cmth_i$)* déterminée en référence au poids *(Pds)* du baigneur de poids de plus faible susceptible de profiter de cette eau de bassin. Selon un mode opératoire avantageux de l'invention, la valeur de concentration maximum *($Copt_i$)* à ne pas dépasser est déterminée parmi le groupe de valeurs préconisées du tableau 2, en prenant comme référence, parmi les baigneurs susceptibles de profiter de ladite eau de bassin, le baigneur de poids le plus faible.

Ce faisant, on obtient des eaux visuellement colorées, parfaitement limpides, sans nocivité ni toxicité pour les baigneurs, et qui ne tâchent pas les tissus (vêtements, maillots et serviettes) de façon permanente et visible à l'oeil.

Avantageusement, une dilution unique est préconisée ; cette dilution étant déterminée par rapport à un baigneur de poids standard, notamment au baigneur de poids le plus faible susceptible de profiter de cette eau de bassin.

L'invention concerne également l'utilisation d'au moins un colorant (*i*) choisi dans le groupe formé par les colorants alimentaires : E 131, E 132, E 133, E 104, E 110, E 122, E 123, E 124, E 129, E 151 ; pour préparer une composition de coloration destinée à être mélangée à une eau de bassin avec une dilution telle que la concentration finale ($C_i$) de chaque colorant (*i*) est adaptée pour rendre ladite eau visuellement colorée et sans que cette concentration finale ($C_i$) ne dépasse une concentration maximum *($Cmax_i$)* et/ou une concentration maximum théorique *($Cmth_i$)* et/ou corresponde à une concentration optimale *($Copt_i$)* telles que mentionnées ci dessus.

L'invention concerne en outre un procédé et une composition permettant de colorer des eaux de bassins, ainsi que l'utilisation d'au moins un colorant alimentaire (*i*) précédemment cité pour préparer ladite composition, caractérisés en combinaison par tout ou partie des caractéristiques mentionnées ci-dessus ou ci-après.

D'autres buts, caractéristiques et avantages de l'invention apparaîtront à la lecture de la description suivante qui se rapporte à un ensemble de tests réalisés par les inventeurs sur les colorants d'une composition selon l'invention.

Les tests montrent que l'invention présente les avantages suivants : non-toxicité de l'eau colorée ; stabilité de la coloration (persistance de l'intensité de la couleur et de la tenue de cette couleur, absence de variation de la teinte au cours du temps) ; préservation de la transparence globale de l'eau ; absence d'effet des colorants sur la peau, les cheveux, les vêtements des baigneurs.

1 - Tests spectrophotométriques des colorants candidats.

Chaque colorant testé a été dissout, à différentes concentrations, dans une eau potable additionnée ou non d'hypochlorite de sodium à 2 $mg.ml^{-1}$ (pour ce faire, on utilise une eau de javel du commerce à 36° de chlore).

La stabilité de la coloration, la persistance de l'intensité de la couleur et sa tenue, la variation de la teinte au cours du temps ont fait l'objet d'une étude par spectroscopie d'absorption UV/visible (plage spectrale d'analyse allant de 300 à 800 nm).

Les analyses spectrophotométriques réalisées par les inventeurs démontrent un effet de coloration et une persistance de la teinte pendant plusieurs jours avec les colorants alimentaires référencés dans le tableau 3 ci-après.

Tableau 3

| Référence fournisseur | Code couleur |
|---|---|
| Bleu 6916 | E 132 |
| Bleu 6904 | E 131 |
| Bleu 6917 | E 133 |
| Yellow 6907 | E 110 |
| Yellow 6912 | E 104 |
| Red 6915 | E 129 |
| Red 6905 | E 122 |
| Red 6913 | E 123 |
| Red 6906 | E 124 |
| Black 6906 | E 151 |

Il a été également constaté que la présence d'hypochlorite de sodium (à une concentration finale de l'ordre de 2 $mg.ml^{-1}$) accélère notablement la disparition de la teinte. Néanmoins, pour les colorants précités (utilisés dans les conditions opératoires précises préconisées par l'invention) la coloration perdure favorablement pendant plus de 24 heures.

2- Evaluation de la dose toxique et de la concentration maximum *($Cmax_i$)* à ne pas dépasser.

Pour chaque colorant alimentaire *(i)* envisagé, la concentration maximum *($Cmax_i$)* correspondante a été évaluée en prenant en compte sa dose journalière admissible, ou DJA (c'est-à-dire la dose qu'une personne peut ingérer tous les jours sans risque appréciable pour sa santé), et en considérant que, à l'occasion d'un bain ordinaire dans une piscine ou un spa, une personne ordinaire ingurgite rarement une quantité d'eau dépassant 200 ml par jour.
Le tableau 4 ci-après expose les DJA des colorants alimentaires E 131, E 132, E 133, E 104, E 110, E 122, E 123, E 124, E 129 et E 151.

Tableau 4

| Colorant | Dose journalière admissible (mg par kg corporel de l'individu) |
|---|---|
| E 132 | 5,00 |
| E 131 | 2,50 |
| E 133 | aucune toxicité constatée |
| E 110 | 2,50 |
| E 104 | 0,75 |
| E 129 | aucune toxicité constatée |
| E 122 | 2,00 |
| E 123 | 0,75 |
| E124 | 0,15 |
| E 151 | 1,00 |

Les inventeurs ont pu constater que les DJA de ces colorants alimentaires particuliers sont parfaitement compatibles avec une utilisation à des fins de coloration d'eaux de bains et/ou de baignades.

3- Tests de teinture des vêtements.

Les inventeurs ont également procédé à une évaluation du risque de coloration inopinée des tissus (vêtements, serviettes) plongés dans une eau colorée par les colorants alimentaires d'une composition selon l'invention.
Chaque colorant a été testé à des concentrations croissantes jusqu'à visualisation d'un changement de teinte des tissus.
Le tableau 5 ci-après résume les résultats obtenus avec les colorants alimentaires E 131, E 132, E 133, E 104, E 110, E 122, E 123, E 124, E 129 et E 151, et précise pour chacun d'eux la concentration limite à partir de laquelle les inventeurs ont pu observer une coloration des tissus.

Tableau 5

| Concentrations de pigments ($g.m^{-3}$ d'eau) | |
|---|---|
| E 151 | -----------------------------------2,9 |
| E 104 | -----------1,3 |
| E 110 | ---------------1,6 |
| E 122 | --------------------------2,3 |
| E 123 | -----------------------------2,6 |
| E 124 | --------------------------------2,8 |
| E 129 | -----------------1,8 |
| E 131 | ---0,4 |

(suite)

| Concentrations de pigments ($g.m^{-3}$ d'eau) | |
|---|---|
| E 132 | -------------------1,9 |
| E 133 | ----0,5 |

4- Tests d'opacité de l'eau.

Les inventeurs ont également procédé à une évaluation de la concentration limite à partir de laquelle le colorant utilisé donne lieu à une opacité apparente de l'eau. Chaque colorant a été testé à des concentrations croissantes jusqu'à visualisation d'une perte de la transparence globale de l'eau, visible à l'oeil nu à distance.

Le tableau 6 ci-après résume les résultats obtenus avec les colorants E 131, E 132, E 133, E 104, E 110, E 122, E 123, E 124, E 129 et E 151, et précise pour chacun d'eux la concentration limite à partir de laquelle l'eau perd sa transparence.

Tableau 6

| Concentrations de pigments ($g.m^{-3}$ d'eau) | |
|---|---|
| E 151 | ---------------------------2,4 |
| E 104 | ---------1,2 |
| E 110 | ------------1,4 |
| E 122 | ----------------------2,0 |
| E 123 | ------------------------2,3 |
| E 124 | --------------------------2,4 |
| E 129 | ------------------1,7 |
| E 131 | -----0,5 |
| E 132 | ---------------------2,0 |
| E 133 | -------0,6 |

**Revendications**

1. Procédé pour colorer une eau de bassin, dans lequel on utilise au moins un colorant *(i)* choisi dans le groupe formé par les colorants alimentaires : E 131, E 132, E 133, E 104, E 110, E 122, E 123, E 124, E 129, E 151, que l'on mélange à ladite eau pour obtenir une concentration finale ($C_i$) de ce colorant *(i),* adaptée pour rendre ladite eau visuellement colorée et sans que cette concentration finale ($C_i$) ne dépasse une concentration maximum ($Cmax_i$), spécifique audit colorant *(i),* de valeur suivante :

   - 0,4 $g.m^{-3}$ pour le colorant E 131,
   - 0,5 $g.m^{-3}$ pour le colorant E 132,
   - 0,4 $g.m^{-3}$ pour le colorant E 133,
   - 0,6 $g.m^{-3}$ pour le colorant E 104,
   - 0,25 $g.m^{-3}$ pour le colorant E 110,
   - 0,5 $g.m^{-3}$ pour le colorant E 122,
   - 0,3 $g.m^{-3}$ pour le colorant E 123,
   - 0,5 $g.m^{-3}$ pour le colorant E 124,
   - 0,5 $g.m^{-3}$ pour le colorant E 129,
   - 0,5 $g.m^{-3}$ pour le colorant E 151.

2. Procédé selon la revendication 1, **caractérisé en ce que** les valeurs de concentrations maximum ($Cmax_i$) de chaque colorant *(i)* sont les suivantes :

   - 0,3 $g.m^{-3}$ pour le colorant E 131,
   - 0,4 $g.m^{-3}$ pour le colorant E 132,
   - 0,2 $g.m^{-3}$ pour le colorant E 133,
   - 0,56 $g.m^{-3}$ pour le colorant E 104,

- 0,25 $g.m^{-3}$ pour le colorant E 110,
- 0,4 $g.m^{-3}$ pour le colorant E 122,
- 0,3 $g.m^{-3}$ pour le colorant E 123,
- 0,4 $g.m^{-3}$ pour le colorant E 124,
- 0,4 $g.m^{-3}$ pour le colorant E 129,
- 0,4 $g.m^{-3}$ pour le colorant E 151.

**3.** Procédé selon l'une des revendications 1 et 2, **caractérisé en ce que** les valeurs de concentrations maximum *($Cmax_i$)* de chaque colorant (i) sont les suivantes :

- 0,2 $g.m^{-3}$ pour le colorant E 131,
- 0,25 $g.m^{-3}$ pour le colorant E 132,
- 0,1 $g.m^{-3}$ pour le colorant E 133,
- 0,3 $g.m^{-3}$ pour le colorant E 104,
- 0,12 $g.m^{-3}$ pour le colorant E 110,
- 0,2 $g.m^{-3}$ pour le colorant E 122,
- 0,2 $g.m^{-3}$ pour le colorant E 123,
- 0,2 $g.m^{-3}$ pour le colorant E 124,
- 0,2 $g.m^{-3}$ pour le colorant E 129,
- 0,2 $g.m^{-3}$ pour le colorant E 151.

**4.** Procédé selon l'une des revendications 1 à 3, **caractérisé en ce qu'**on mélange chaque colorant (i) choisi à l'eau de bassin pour obtenir une concentration finale ($C_i$) de ce colorant (i), adaptée pour rendre ladite eau visuellement colorée et sans que cette concentration finale ($C_i$) ne dépasse aussi une concentration maximum théorique *($Cmth_i$),* spécifique audit colorant (i) et de valeur déterminée par l'équation (Eq. 1) de forme générale :

$$Cmth_i = K_i \times Pds + a_i \qquad (Eq.\ 1)$$

dans laquelle :

- $Cmth_i$ est exprimée en $g.m^{-3}$ d'eau,
- *Pds,* exprimé en kg, est une variable correspondant au poids d'un baigneur de référence,
- $K_i$ et $a_i$ sont des coefficients prédéterminés, spécifiques à chaque colorant (i), et tels que :

  - $K_{E\ 131} = 33.10^{-4}$ $a_{E\ 131} \sim 0$
  - $K_{E\ 132} = 33.10^{-4}$ $a_{E\ 132} \sim 0$
  - $K_{E\ 133} = 40.10^{-4}$ $a_{E\ 133} = 0$
  - $K_{E\ 104} = 40.10^{-4}$ $a_{E\ 104} \sim 0$
  - $K_{E\ 110} = 50.10^{-4}$ $a_{E\ 110} \sim 0$
  - $K_{E\ 122} = 33.10^{-4}$ $a_{E\ 122} \sim 0$
  - $K_{E\ 123} = 20.10^{-4}$ $a_{E\ 123} \sim 0$
  - $K_{E\ 124} = 33.10^{-4}$ $a_{E\ 124} \sim 0$
  - $K_{E\ 129} = 33.10^{-4}$ $a_{E\ 129} = 0$
  - $K_{E\ 151} = 33.10^{-4}$ $a_{E\ 151} \sim 0$.

**5.** Procédé selon la revendication 4, **caractérisé en ce que**, pour chaque colorant *(i)* choisi, on détermine la valeur de concentration maximum *($Cmth_i$)* à ne pas dépasser en utilisant une base de données préétablie regroupant des valeurs de concentration maximum *($Cmth_i$)* préconisées, déterminées par l'équation (*Eq. 1*).

**6.** Procédé selon la revendication 5, **caractérisé en ce que**, pour chaque colorant *(i)* choisi, on réalise une dilution préconisée découlant des données présentées dans le tableau 1 ci-après :

| | | $Cmth_i$ (g/m³ d'eau) | | | | | | |
|---|---|---|---|---|---|---|---|---|
| | *Pds* (kg) | 10 | 20 | 50 | 80 | 100 | 120 | 150 |
| Colorant (*i*) | E 131 | 0,12 | 0,25 | 0,40 | 0,40 | 0,40 | 0,40 | 0,40 |
| | E 132 | 0,25 | 0,50 | 0,50 | 0,50 | 0,50 | 0,50 | 0,50 |
| | E 133 | 0,40 | 0,40 | 0,40 | 0,40 | 0,40 | 0,40 | 0,40 |
| | E 104 | 0,03 | 0,07 | 0,18 | 0,30 | 0,37 | 0,45 | 0,56 |
| | E 110 | 0,12 | 0,25 | 0,75 | 0,75 | 0,75 | 0,75 | 0,75 |
| | E 122 | 0,10 | 0,20 | 0,50 | 0,50 | 0,50 | 0,50 | 0,50 |
| | E 123 | 0,03 | 0,07 | 0,18 | 0,30 | 0,30 | 0,30 | 0,30 |
| | E 124 | 0,007 | 0,01 | 0,03 | 0,06 | 0,07 | 0,09 | 0,11 |
| | E 129 | 0,50 | 0,50 | 0,50 | 0,50 | 0,50 | 0,50 | 0,50 |
| | E 151 | 0,05 | 0,10 | 0,25 | 0,40 | 0,50 | 0,50 | 0,50 |

**7.** Procédé selon l'une des revendications 4 à 6, **caractérisé en ce qu'**on mélange à l'eau de bassin chaque colorant *(i)* choisi en réalisant une dilution permettant d'obtenir une eau colorée ayant une concentration finale ($C_i$) de ce colorant *(i),* de valeur optimale *($Copt_i$)* donnée en référence au poids (*Pds*) d'un baigneur de référence, et selon le tableau 2 ci-après :

| | | $Copt_i$ (g/m³ d'eau) | | | | | | |
|---|---|---|---|---|---|---|---|---|
| | *Pds* (kg) | 10 | 20 | 50 | 80 | 100 | 120 | 150 |
| Colorant (*i*) | E 131 | 0,12 | 0,20 | 0,20 | 0,20 | 0,20 | 0,20 | 0,20 |
| | E 132 | 0,25 | 0,25 | 0,25 | 0,25 | 0,25 | 0,25 | 0,25 |
| | E 133 | 0,10 | 0,10 | 0,10 | 0,10 | 0,10 | 0,10 | 0,10 |
| | E 104 | 0,03 | 0,07 | 0,18 | 0,30 | 0,30 | 0,30 | 0,30 |
| | E 110 | 0,12 | 0,12 | 0,12 | 0,12 | 0,12 | 0,12 | 0,12 |
| | E 122 | 0,10 | 0,20 | 0,20 | 0,20 | 0,20 | 0,20 | 0,20 |
| | E 123 | 0,03 | 0,07 | 0,18 | 0,20 | 0,20 | 0,20 | 0,20 |
| | E 124 | 0,007 | 0,01 | 0,03 | 0,06 | 0,07 | 0,09 | 0,11 |
| | E 129 | 0,20 | 0,20 | 0,20 | 0,20 | 0,20 | 0,20 | 0,20 |
| | E 151 | 0,05 | 0,10 | 0,20 | 0,20 | 0,20 | 0,20 | 0,20 |

**8.** Procédé selon l'une des revendications 4 à 7, **caractérisé en ce qu'**on mélange à l'eau de bassin chaque colorant (i) choisi en réalisant une dilution permettant d'obtenir une eau visuellement colorée ayant une concentration finale ($C_i$) de ce colorant *(i),* qui ne dépasse pas une valeur maximum théorique *($Cmth_i$)* déterminée en référence au poids *(Pds)* du baigneur de poids de plus faible susceptible de profiter de cette eau de bassin.

**9.** Utilisation d'au moins un colorant *(i)* choisi dans le groupe formé par les colorants alimentaires : E 131, E 132, E 133, E 104, E 110, E 122, E 123, E 124, E 129, E 151 ; pour préparer une composition de coloration destinée à être mélangée à une eau de bassin avec une dilution telle que la concentration finale ($C_i$) de chaque colorant *(i)* est adaptée pour rendre ladite eau visuellement colorée et sans que cette concentration finale *(Ci)* ne dépasse une

concentration maximum (*$Cmax_i$*) et/ou une concentration maximum théorique *($Cmth_i$)*, et/ou correspondant à une concentration optimale *($Copt_i$)*, spécifiques audit colorant *(i)* selon l'une des revendications 1 à 8.

## Claims

**1.** Method for colouring water from a pool, in which at least one colouring agent (i) is used, chosen from the group formed by the food colouring agents E 131, E 132, E 133, E 104, E 110, E 122, E 123, E 124, E 129, E 151, which is mixed with said water to obtain a final concentration ($C_i$) of this colouring agent (i) that is suitable to give said water a visual colouration without this final concentration ($C_i$) exceeding a maximum concentration *($Cmax_i$)*, specific to said colouring agent (i), of the following value:

- 0.4 $g.m^{-3}$ for colouring agent E 131,
- 0.5 $g.m^{-3}$ for colouring agent E 132,
- 0.4 $g.m^{-3}$ for colouring agent E 133,
- 0.6 $g.m^{-3}$ for colouring agent E 104,
- 0.25 $g.m^{-3}$ for colouring agent E 110,
- 0.5 $g.m^{-3}$ for colouring agent E 122,
- 0.3 $g.m^{-3}$ for colouring agent E 123,
- 0.5 $g.m^{-3}$ for colouring agent E 124,
- 0.5 $g.m^{-3}$ for colouring agent E 129,
- 0.5 $g.m^{-3}$ for colouring agent E 151.

**2.** Method according to claim 1, **characterised in that** the values for the maximum concentrations *($Cmax_i$)* of each colouring agent (i) are as follows:

- 0.3 $g.m^{-3}$ for colouring agent E 131,
- 0.4 $g.m^{-3}$ for colouring agent E 132,
- 0.2 $g.m^{-3}$ for colouring agent E 133,
- 0.56 $g.m^{-3}$ for colouring agent E 104,
- 0.25 $g.m^{-3}$ for colouring agent E 110,
- 0.4 $g.m^{-3}$ for colouring agent E 122,
- 0.3 $g.m^{-3}$ for colouring agent E 123,
- 0.4 $g.m^{-3}$ for colouring agent E 124,
- 0.4 $g.m^{-3}$ for colouring agent E 129,
- 0.4 $g.m^{-3}$ for colouring agent E 151.

**3.** Method according to one of claims 1 and 2, **characterised in that** the values for the maximum concentrations *($Cmax_i$)* of each colouring agent *(i)* are as follows:

- 0.2 $g.m^{-3}$ for colouring agent E 131,
- 0.25 $g.m^{-3}$ for colouring agent E 132,
- 0.1 $g.m^{-3}$ for colouring agent E 133,
- 0.3 $g.m^{-3}$ for colouring agent E 104,
- 0.12 $g.m^{-3}$ for colouring agent E 110,
- 0.2 $g.m^{-3}$ for colouring agent E 122,
- 0.2 $g.m^{-3}$ for colouring agent E 123,
- 0.2 $g.m^{-3}$ for colouring agent E 124,
- 0.2 $g.m^{-3}$ for colouring agent E 129,
- 0.2 $g.m^{-3}$ for colouring agent E 151.

**4.** Method according to one of claims 1 to 3, **characterised in that** each chosen colouring agent *(i)* is mixed with the pool water to obtain a final concentration *($C_i$)* of this colouring agent *(i)* that is suitable to give said water a visual colouration without this final concentration *($C_i$)* also exceeding a maximum theoretical concentration *($Cmth_i$)*, specific to said colouring agent *(i)* and of a value determined by the general equation (*Eq. 1*):

$$Cmth_i = K_i \times Pds + a_i \qquad (Eq.\ 1)$$

in which

- $Cmth_i$ is expressed in $g.m^{-3}$ of water,
- *Pds,* expressed in kg, is a variable corresponding to the weight of a reference bather,
- $K_i$ and $a_i$ are predetermined coefficients specific to each colouring agent *(i),* such that:

  - $K_{E\ 131} = 33.10^{-4}$ $a_{E\ 131} \sim 0$
  - $K_E$ $132 = 33.10^{-4}$ $a_{E\ 132} \sim 0$
  - $K_{E\ 133} = 40.10^{-4}$ $a_{E\ 133} = 0$
  - $K_{E\ 104} = 40.10^{-4}$ $a_{E\ 104} \sim 0$
  - $K_{E\ 110} = 50.10^{-4}$ $a_{E\ 110} \sim 0$
  - $K_{E\ 122} = 33.10^{-4}$ $a_{E\ 122} \sim 0$
  - $K_{E\ 123} = 20.10^{-4}$ $a_{E\ 123} \sim 0$
  - $K_{E\ 124} = 33.10^{-4}$ $a_{E\ 124} \sim 0$
  - $K_{E\ 129} = 33.10^{-4}$ $a_{E\ 129} = 0$
  - $K_{E\ 151} = 33.10^{-4}$ $a_{E\ 151} \sim 0$.

**5.** Method according to claim 4, **characterised in that** for each chosen colouring agent *(i),* the maximum concentration value *($Cmth_i$)* not to be exceeded is determined using a predefined database containing recommended maximum concentration values *($Cmth_i$)* determined by the equation *(Eq. 1)*.

**6.** Method according to claim 5, **characterised in that** for each chosen colouring agent *(i),* a recommended dilution is made, deriving from the data set out in Table 1 below:

| | | $Cmth_i$ ($g/m^3$ water) | | | | | | |
|---|---|---|---|---|---|---|---|---|
| *Pds* (kg) | | 10 | 20 | 50 | 80 | 100 | 120 | 150 |
| Colouring agent *(i)* | E 131 | 0.12 | 0.25 | 0.40 | 0.40 | 0.40 | 0.40 | 0.40 |
| | E 132 | 0.25 | 0.50 | 0.50 | 0.50 | 0.50 | 0.50 | 0.50 |
| | E 133 | 0.40 | 0.40 | 0.40 | 0.40 | 0.40 | 0.40 | 0.40 |
| | E 104 | 0.03 | 0.07 | 0.18 | 0.30 | 0.37 | 0.45 | 0.56 |
| | E 110 | 0.12 | 0.25 | 0.75 | 0.75 | 0.75 | 0.75 | 0.75 |
| | E 122 | 0.10 | 0.20 | 0.50 | 0.50 | 0.50 | 0.50 | 0.50 |
| | E 123 | 0.03 | 0.07 | 0.18 | 0.30 | 0.30 | 0.30 | 0.30 |
| | E 124 | 0.007 | 0.01 | 0.03 | 0.06 | 0.07 | 0.09 | 0.11 |
| | E 129 | 0.50 | 0.50 | 0.50 | 0.50 | 0.50 | 0.50 | 0.50 |
| | E 151 | 0.05 | 0.10 | 0.25 | 0.40 | 0.50 | 0.50 | 0.50 |

**7.** Method according to one of claims 4 to 6, **characterised in that** each chosen colouring agent *(i)* is mixed with the pool water by making a dilution that allows a coloured water to be obtained having a final concentration *($C_i$)* of this colouring agent *(i)* of an optimum value *($Copt_i$)* given by reference to the weight *(Pds)* of a reference bather and in accordance with Table 2 below:

| | | $Copt_i$ (g/m$^3$ water) | | | | | | |
|---|---|---|---|---|---|---|---|---|
| *Pds* (kg) | | 10 | 20 | 50 | 80 | 100 | 120 | 150 |
| Colouring agent (*i*) | E 131 | 0.12 | 0.20 | 0.20 | 0.20 | 0.20 | 0.20 | 0.20 |
| | E 132 | 0.25 | 0.25 | 0.25 | 0.25 | 0.25 | 0.25 | 0.25 |
| | E 133 | 0.10 | 0.10 | 0.10 | 0.10 | 0.10 | 0.10 | 0.10 |
| | E 104 | 0.03 | 0.07 | 0.18 | 0.30 | 0.30 | 0.30 | 0.30 |
| | E 110 | 0.12 | 0.12 | 0.12 | 0.12 | 0.12 | 0.12 | 0.12 |
| | E 122 | 0.10 | 0.20 | 0.20 | 0.20 | 0.20 | 0.20 | 0.20 |
| | E 123 | 0.03 | 0.07 | 0.18 | 0.20 | 0.20 | 0.20 | 0.20 |
| | E 124 | 0.007 | 0.01 | 0.03 | 0.06 | 0.07 | 0.09 | 0.11 |
| | E 129 | 0.20 | 0.20 | 0.20 | 0.20 | 0.20 | 0.20 | 0.20 |
| | E 151 | 0.05 | 0.10 | 0.20 | 0.20 | 0.20 | 0.20 | 0.20 |

**8.** Method according to one of claims 4 to 7, **characterised in that** each chosen colouring agent *(i)* is mixed with the pool water by making a dilution that allows a visually coloured water to be obtained having a final concentration $(C_i)$ of this colouring agent *(i)* not exceeding a maximum theoretical value $(Cmth_i)$ determined by reference to the weight *(Pds)* of the lightest bather likely to make use of this pool water.

**9.** Use of at least one colouring agent *(i)* chosen from the group formed by the food colouring agents E 131, E 132, E 133, E 104, E 110, E 122, E 123, E 124, E 129, E 151 to prepare a colouring composition intended to be mixed with water from a pool in a dilution such that the final concentration $(C_i)$ of each colouring agent *(i)* is suitable to give said water a visual colouration without this final concentration $(C_i)$ exceeding a maximum concentration $(Cmax_i)$ and/or a maximum theoretical concentration $(Cmth_i)$ and/or corresponding to an optimum concentration $(Copt_i)$, specifics to said colouring agent *(i)* according to one of claims 1 to 8.

**Patentansprüche**

**1.** Verfahren zum Färben von Wasser in einem Becken, in dem wenigstens ein Farbstoff (*i*) verwendet wird, der aus der Gruppe ausgewählt ist, die durch die Lebensmittelfarbstoffe: E 131, E 132, E 133, E 104, E 110, E 122, E 123, E 124, E 129, E 151 gebildet wird, die mit dem genannten Wasser vermischt werden, um eine endgültige Konzentration $(C_1)$ dieses Farbstoffs (i) zu erhalten, die angepasst ist, um das genannte Wasser sichtbar farbig zu machen und ohne dass diese endgültige Konzentration $(C_i)$ eine für den genannten Farbstoff (*i*) spezifische, maximale Konzentration $(Cmax_i)$ mit folgendem Wert übersteigt:

- 0,4 $g.m^{-3}$ für den Farbstoff E 131,
- 0,5 $g.m^{-3}$ für den Farbstoff E 132,
- 0,4 $g.m^{-3}$ für den Farbstoff E 133,
- 0,6 $g.m^{-3}$ für den Farbstoff E 104,
- 0,25 $g.m^{-3}$ für den Farbstoff E 110,
- 0,5 $g.m^{-3}$ für den Farbstoff E 122,
- 0,3 $g.m^{-3}$ für den Farbstoff E 123,
- 0,5 $g.m^{-3}$ für den Farbstoff E 124,
- 0,5 $g.m^{-3}$ für den Farbstoff E 129,
- 0,5 $g.m^{-3}$ für den Farbstoff E 151,

**2.** Verfahren gemäß Anspruch 1, **dadurch gekennzeichnet, dass** die Werte maximaler Konzentrationen $(Cmax_i)$

jedes Farbstoffs (*i*) wie folgt lauten:

- 0,3 $g.m^{-3}$ für den Farbstoff E 131,
- 0,4 $g.m^{-3}$ für den Farbstoff E 132,
- 0,2 $g.m^{-3}$ für den Farbstoff E 133,
- 0,56 $g.m^{-3}$ für den Farbstoff E 104,
- 0,25 $g.m^{-3}$ für den Farbstoff E 110,
- 0,4 $g.m^{-3}$ für den Farbstoff E 122,
- 0,3 $g.m^{-3}$ für den Farbstoff E 123,
- 0,4 $g.m^{-3}$ für den Farbstoff E 124,
- 0,4 $g.m^{-3}$ für den Farbstoff E 129,
- 0,4 $g.m^{-3}$ für den Farbstoff E 151,

**3.** Verfahren gemäß Anspruch 1 und 2, **dadurch gekennzeichnet, dass** die Werte maximaler Konzentration ($Cmax_i$) jedes Farbstoffs (*i*) wie folgt lauten:

- 0,2 $g.m^{-3}$ für den Farbstoff E 131,
- 0,25 $g.m^{-3}$ für den Farbstoff E 132,
- 0,1 $g.m^{-3}$ für den Farbstoff E 133,
- 0,3 $g.m^{-3}$ für den Farbstoff E 104,
- 0,12 $g.m^{-3}$ für den Farbstoff E 110,
- 0,2 $g.m^{-3}$ für den Farbstoff E 122,
- 0,2 $g.m^{-3}$ für den Farbstoff E 123,
- 0,2 $g.m^{-3}$ für den Farbstoff E 124,
- 0,2 $g.m^{-3}$ für den Farbstoff E 129,
- 0,2 $g.m^{-3}$ für den Farbstoff E 151,

**4.** Verfahren gemäß Anspruch 1 bis 3, **dadurch gekennzeichnet, dass** jeder ausgewählte Farbstoff (*i*) mit dem Wasser in dem Becken gemischt wird, um eine endgültige Konzentration ($C_i$) dieses Farbstoffs (i) zu erhalten, die angepasst ist, um das genannte Wasser sichtbar farbig zu machen, und ohne dass diese endgültige Konzentration ($C_i$) auch eine für den genannten Farbstoff ($C_i$) spezifische theoretische maximale Konzentration ($Cmth_i$) und mit einem durch die Gleichung (*Eq. 1*) bestimmten Wert mit der allgemeinen Formel:

$$Cmth_i = K_i \, x \, Pds + a_1 \quad (Eq.\ 1)$$

übersteigt, in der:

- $Cmth_i$ in $g.m^3$ Wasser ausgedrückt wird,
- *Pds,* in kg ausgedrückt, eine Variable ist, die dem Gewicht eines Referenz-Badegastes entspricht,
- $K_i$ und $a_1$ vorbestimmte, für jeden Farbstoff (*i*) spezifische Koeffizienten sind, wie z. B.:

  - $K_{E\ 131} = 33.10^{-4}$ $a_{E\ 131}$ ~0
  - $K_{E\ 132} = 33.10^{-4}$ $a_{E\ 132}$ ~0
  - $K_{E\ 133} = 40.10^{-4}$ $a_{E\ 133}$ =0
  - $K_{E\ 104} = 40.10^{-4}$ $a_{E\ 104}$ ~0
  - $K_{E\ 110} = 50.10^{-4}$ $a_{E\ 110}$ ~0
  - $K_{E\ 122} = 33.10^{-4}$ $a_{E\ 122}$ ~0
  - $K_{E\ 123} = 20.10^{-4}$ $a_{E\ 123}$ ~0
  - $K_{E\ 124} = 33.10^{-4}$ $a_{E\ 124}$ ~0
  - $K_{E\ 129} = 33.10^{-4}$ $a_{E\ 129}$ =0
  - $K_{E\ 151} = 33.10^{-4}$ $a_{E\ 151}$ ~0

**5.** Verfahren gemäß Anspruch 4, **dadurch gekennzeichnet, dass** für jeden gewählten Farbstoff (*i*) der nicht zu überschreitende Wert maximaler Konzentration ($Cmth_i$) bestimmt wird, indem eine vorab erstellte Datenbank herangezogen wird, die die vorgeschriebenen Werte maximaler Konzentration ($Cmth_i$) zusammenfasst, die durch die Gleichung (*Eq. 1*) bestimmt werden.

**6.** Verfahren gemäß Anspruch 5, **dadurch gekennzeichnet, dass** für jeden gewählten Farbstoff (*i*) eine vorgeschriebene Verdünnung realisiert wird, die aus den in der nachstehenden Tabelle 1 präsentierten Daten hervorgeht:

| | | $Cmth_i$ ($g/m^3$ Wasser) | | | | | | |
|---|---|---|---|---|---|---|---|---|
| *Pds* (kg) | | 10 | 20 | 50 | 80 | 100 | 120 | 150 |
| Farb-stoff (*i*) | E 131 | 0,12 | 0,25 | 0,40 | 0,40 | 0,40 | 0,40 | 0,40 |
| | E 132 | 0,25 | 0,50 | 0,50 | 0,50 | 0,50 | 0,50 | 0,50 |
| | E 133 | 0,40 | 0,40 | 0,40 | 0,40 | 0,40 | 0,40 | 0,40 |
| | E 104 | 0,03 | 0,07 | 0,18 | 0,30 | 0,37 | 0,45 | 0,56 |
| | E 110 | 0,12 | 0,25 | 0,75 | 0,75 | 0,75 | 0,75 | 0,75 |
| | E 122 | 0,10 | 0,20 | 0,50 | 0,50 | 0,50 | 0,50 | 0,50 |
| | E 123 | 0,03 | 0,07 | 0,18 | 0,30 | 0,30 | 0,30 | 0,30 |
| | E 124 | 0,007 | 0,01 | 0,03 | 0,06 | 0,07 | 0,09 | 0,11 |
| | E 129 | 0,50 | 0,50 | 0,50 | 0,50 | 0,50 | 0,50 | 0,50 |
| | E 151 | 0,05 | 0,10 | 0,25 | 0,40 | 0,50 | 0,50 | 0,50 |

**7.** Verfahren gemäß Anspruch 4 bis 6, **dadurch gekennzeichnet, dass** das Wasser in dem Becken mit jedem gewählten Farbstoff (*i*) vermischt wird, indem eine Verdünnung realisiert wird, die den Erhalt eines farbigen Wassers erlaubt, das eine endgültige Konzentration ($C_i$) dieses Farbstoffs (*i*) mit einem optimalen Wert *($Copt_i$)* hat, der für das Gewicht *(Pds)* eines Referenz-Badegastes als Referenz angegeben wird, und gemäß der nachstehenden Tabelle 2:

| | | $Copt_i$ ($g/m^3$ Wasser) | | | | | | |
|---|---|---|---|---|---|---|---|---|
| *Pds* (kg) | | 10 | 20 | 50 | 80 | 100 | 120 | 150 |
| Farb-stoff (*i*) | E 131 | 0,12 | 0,20 | 0,20 | 0,20 | 0,20 | 0,20 | 0,20 |
| | E 132 | 0,25 | 0,25 | 0,25 | 0,25 | 0,25 | 0,25 | 0,25 |
| | E 133 | 0,10 | 0,10 | 0,10 | 0,10 | 0,10 | 0,10 | 0,10 |
| | E 104 | 0,03 | 0,07 | 0,18 | 0,30 | 0,30 | 0,30 | 0,30 |
| | E 110 | 0,12 | 0,12 | 0,12 | 0,12 | 0,12 | 0,12 | 0,12 |
| | E 122 | 0,10 | 0,20 | 0,20 | 0,20 | 0,20 | 0,20 | 0,20 |
| | E 123 | 0,03 | 0,07 | 0,18 | 0,20 | 0,20 | 0,20 | 0,20 |
| | E 124 | 0,007 | 0,01 | 0,03 | 0,06 | 0,07 | 0,09 | 0,11 |
| | E 129 | 0,20 | 0,20 | 0,20 | 0,20 | 0,20 | 0,20 | 0,20 |
| | E 151 | 0,05 | 0,10 | 0,20 | 0,20 | 0,20 | 0,20 | 0,20 |

**8.** Verfahren gemäß Anspruch 4 bis 7, **dadurch gekennzeichnet, dass** das Wasser in dem Becken mit jedem gewählten Farbstoff (*) vermischt wird, indem eine Verdünnung realisiert wird, die den Erhalt eines sichtbar farbigen Wassers erlaubt, die eine endgültige Konzentration *($C_i$)* dieses Farbstoffs *($_i$)* hat, die einen theoretischen maximalen Wert *($Cmth_i$)* nicht überschreitet, der als Referenz des Gewichts *(Pds)* des Badegastes mit dem geringsten Gewicht bestimmt wird, der von diesem Wasser in dem Becken profitieren kann.

**9.** Verwendung von wenigstens einem Farbstoff (*i*) aus der Gruppe gewählt ist, die durch die Lebensmittelfarbstoffe: E 131, E 132, E 133, E 104, E 110, E 122, E 123, E 124, E 129, E 151 gebildet wird, um eine Farbverbindung vorzubereiten, die zur Vermischung mit einem Wasser in einem Becken mit einer derartigen Verdünnung bestimmt ist, dass die endgültige Konzentration *($C_i$)* jedes Farbstoffs (*i*) angepasst ist, um das genannte Wasser sichtbar farbig zu machen und ohne dass diese endgültige Konzentration ($C_i$) eine maximale Konzentration *($Cmax_i$)* und / oder eine theoretische maximale Konzentration ($Cmth_i$) überschreitet und / oder einer optimalen Konzentration *($Copt_i$)* entspricht, die für den genannten Farbstoff (*i*) gemäß Anspruch 1 bis 8 spezifisch sind.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- BR 9600226